# EUROPÄISCHE PATENTSCHRIFT

(11) **EP 2 464 239 B1**
(45) Veröffentlichungstag und Bekanntmachung des Hinweises auf die Patenterteilung: **19.11.2014**
(21) Anmeldenummer: 10740550.8
(22) Anmeldetag: 29.07.2010
(51) Int. Cl.: A23C 9/14, A23C 9/152, A23L 1/015, A23L 1/025, C02F 1/461, C25B 1/04, A23C 3/00, A23C 9/144, A23C 9/146, A23C 19/028, A23C 19/05, A23C 21/10

(54) **LEBENSMITTEL-ELEKTROLYSE**
ELECTROLYSIS OF FOODSTUFF
ÉLECTROLYSE D'UN PRODUIT ALIMENTAIRE

(30) Priorität: 10.08.2009 DE 102009036846; 25.02.2010 DE 102010009251
(43) Veröffentlichungstag der Anmeldung: 20.06.2012
(73) Patentinhaber: ROINER, Franz, 94372 Rattiszell (DE); Gürster, Bernhard, 94356 Kirchroth (DE)
(72) Erfinder: ROINER, Franz, 94372 Rattiszell (DE)
(74) Vertreter: Zinnecker, Armin
(86) Internationale Anmeldenummer: PCT/EP2010/004647
(87) Internationale Veröffentlichungsnummer: WO 2011/018165

(56) Entgegenhaltungen:
- EP-A2- 0 347 387
- WO-A1-01/78525
- WO-A1-95/18545
- WO-A1-02/100194
- DE-A1- 10 359 509
- GB-A- 2 100 289
- JP-A- 10 136 954
- US-A- 4 138 501
- DATABASE FSTA [Online] INTERNATIONAL FOOD INFORMATION SERVICE (IFIS), FRANkFURT-MAIN, DE; 1. Januar 1998 (1998-01-01), ANDREENKO L G ET AL: "Manufacture of lactulose concentrate for milk-based baby foods. (translated)", XP002599821, Database accession no. FS-1999-11-Gc0492 & KHRANENIE I PERERABOTKA SEL'KHOZSYR'YA, Nr. No. 6, 1. Januar 1998 (1998-01-01), Seite 33, KHRANENIE I PERERABOTKA SEL'KHOZSYR'YA 1998 NII DETSKOGO PITANIYA, ISTRA, RUSSIA
- DATABASE WPI Week 199522 Thomson Scientific, London, GB; AN 1995-166354 XP002612264, & JP 7 087938 A (KIRIKI T) 4. April 1995 (1995-04-04)

## Beschreibung

Die Erfindung betrifft ein Verfahren zur Herstellung eines Milchproduktes oder von Bier, wobei das Verfahren und die Verarbeitung mindestens eines Ausgangsstoffes oder Zwischenproduktes ausgewählt aus der Gruppe von Wasser, Maische, Würze oder ausgeschlagenem Bier, Rohmilch, Rahm, Labmolke, Süßmolke, pasteurisierter Milch, fettarmer Milch, Sauermilch, Dickmilch, Gallerte, Dickette, Sauermolke, Sauerrahm, oder Sahne umfasst.

Verfahren zur Herstellung von Produkten wie Lebensmitteln aus flüssigen oder dickflüssigen Ausgangsstoffen und Zwischenprodukten sind bekannt. Beispielsweise wird in der Herstellung von Käse und anderen Milchprodukten Milch aus Ausgangsstoff verwendet, in der Herstellung von Bier reines Wasser.

Die GB 2 100 289 offenbart ein Verfahren zur Trennung von Käsebruch und Käsewasser, wobei Milch durch die anodische Oxidation von Wasser gesäuert wird. Die entsprechende Elektrolysezelle ist so aufgebaut, dass zwischen der Anodenseite und der Katodenseite eine ionenselektive Membran (aus Ionenaustauschermaterial) vor-handen ist, um die Anodenseite, in der sich Käsebruch ablagert, von der Katodenseite, in der das Käsewasser gebildet wird, zu trennen.

Andreenko L. G. et al. "Manufacture of lactulose concentrate for milk-based baby foods", International Food Information Service (IFIS), Frankfurt am Main, DE, 1998 offenbart die Herstellung eines Konzentrats von Laktulose, wobei eine laktulosehaltige Lösung sequentiell pasteurisiert, elektrolysiert und über einen Ionenaustauscher geleitet wird.

Die US 4,138,501 beschäftigt sich mit der Demineralisierung von Milchwasser, wobei eine Elektrolyse und sequentiell danach eine Behandlung mit einem Ionenaustauscher erfolgt. Das Sickern in der Ionenaustauschersäule soll bei einer niedrigeren Temperatur erfolgen als die elektrolytische Behandlung.

Aufgabe der Erfindung ist es, ein gattungsgemäßes Verfahren vorzuschlagen, welches die Qualität der Endprodukte verbessert und/oder den Ablauf einzelner Verfahrensschritte erleichtert.

Gegenstand der Erfindung ist ein Verfahren gemäß Anspruch 1. Vorteilhafte Ausgestaltungen ergeben sich aus den Unteransprüchen.

Demnach ist ein Verfahren zur Herstellung eines Milchproduktes oder von Bier vorgesehen, welches die Verarbeitung mindestens eines Ausgangsstoffes oder Zwischenproduktes ausgewählt aus der Gruppe von Wasser, Maische, Würze oder ausgeschlagenem Bier, Rohmilch, Rahm, Labmolke, Süßmolke, pasteurisierter Milch, fettarmer Milch, Sauermilch, Dickmilch, Gallerte, Dickette, Sauermolke, Sauerrahm, oder Sahne umfasst. Erfindungsgemäß ist eine elektrolytische Behandlung mindestens eines der Ausgangsstoffe und/oder die elektrolytische Behandlung mindestens eines der Zwischenprodukte vorgesehen.

Die elektrolytische Behandlung bewirkt die chemische Veränderung durch Elektrolyse mindestens eines Bestandteiles, vorzugsweise mehrerer Bestandteile des Ausgangsstoffes und/oder Zwischenprodukts. Durch diese Behandlung kann die Zuordnung von Inhaltsstoffen und/oder deren Bindungsart so verändert werden, dass nachfolgende Behandlungsschritte leichter und kostengünstiger durchgeführt werden können bzw. erst ermöglicht werden. Durch die Elektrolyse kann ferner erreicht werden, dass Inhaltsstoffe für die Zwecke des Endproduktes, insbesondere für Ernährungszwecke, optimiert werden. Andere Inhaltsstoffe werden durch die elektrolytische Behandlung für die Zwecke des Endprodukts entfernt, chemisch verändert oder zerstört. Dies kann bei solchen Inhaltsstoffen von Vorteil sein, welche für Ernährungszwecke schlecht oder gar nicht verwertbar sind, oder für Inhaltsstoffe, die bekanntermaßen zumindest für einen Teil der Konsumenten unverträglich oder schwer verträglich sind (Lactoseunverträglichkeit, Eiweißallergien etc.).

Erfindungsgemäß ist vorgesehen, dass genau ein Ausgangsstoff und/oder genau ein Zwischenprodukt elektrolytisch behandelt wird.

In einer weiteren Ausführungsform entsteht bei der elektrolytischen Behandlung durch die Zersetzung von Bestandteilen des wasserbasierten Ausgangsstoffes und/oder Zwischenproduktes ein Gas, vorzugsweise zumindest großteils Wasserstoff und/oder Sauerstoff.

Es hat sich überraschend gezeigt, dass während der Elektrolyse gewisse Inhaltsstoffe mit den bei der Elektrolyse entstehenden Gasen aus dem Ausgangsstoff und/oder dem Zwischenprodukt abgeführt werden. Die Inhaltsstoffe können gasförmig im Gas mitgeführt werden und/oder an der gegebenenfalls darin vorhandenen Restfeuchtigkeit anhaften und/oder in feinstverteilter flüssiger Form im Gas mitgetragen werden und/oder sich zu Schwebeteilchen akkumulieren und/oder sich an anderen Schwebeteilchen anlagern.

Geeignete elektrolytische Behandlungen des Ausgangsstoffes und/oder des Zwischenproduktes umfassen einstufige oder mehrstufige elektrolytische Behandlungen, kontinuierliche oder diskontinuierliche elektrolytische Behandlungen, und/oder elektrolytische Behandlungen mit konstantem oder einem zeitabhängigen Spannungsverlauf. In einer Ausführungsform beträgt die Betriebsspannung bei der Elektrolyse zwischen 1,2 V und 2 V. Die Verfahren können aber auch jenseits dieses Spannungsbereiches, beispielsweise bei zwischen 2 V und 4 V oder bei Spannungen von bis zu 12 V erfolgreich durchgeführt werden.

Die elektrolytische Behandlung kann während einem Verfahrensschritt, der normalerweise in vorbekannten Methoden zur Herstellung des jeweiligen Endproduktes durchgeführt wird, durchgeführt werden. Alternativ kann die elektrolytische Behandlung einen eigenen, zusätzlichen Verfahrensschritt darstellen, der zwischen zwei in vorbekannten Methoden zur Herstellung des jeweiligen Endproduktes durchgeführten Verfahrensschritten durchgeführt wird.

Die erfindungsgemäßen Verfahrensschritte können eigene Schritte in der Herstellung des Produktes darstellen, oder zwischen zwei Verfahrensschritten durchgeführt werden.

Erfindungsgemäß wird der Ausgangsstoff und/oder das Zwischenprodukt ferner mit einem Ionenaustauscher kontaktiert wobei es sich bei dem Ionenaustauscher um ein partikuläres Ionentauschermaterial handelt. Dies geschieht während der elektrolytischen Behandlung.

Beim Durchströmen eines Ionenaustauschers mit dem Ausgangsstoff und/oder dem Zwischenprodukt können Inhaltsstoffe bzw. Zusatzstoffe an den Ionenaustauscher angelagert werden und andere am Ionenaustauscher anhaftende Stoffe wie Ionen ersetzen.

Es hat sich überraschend gezeigt, dass das Vorhandensein eines Ionenaustauschers in der Elektrolysezone die Abfuhr von Inhaltsstoffen und/oder Zusatzstoffen mit den bei der Elektrolyse entstehenden Gasen verstärkt.

In einer Ausführungsform wird der Ausgangsstoff und/oder das Zwischenprodukt mit mindestens und vorzugsweise genau zwei Arten von Ionenaustauschern kontaktiert, wobei vorzugsweise mindestens einer der Ionenaustauscher sauer, d.h. ein Kationenaustauscher, und ein weiterer der Ionenaustauscher basisch, d.h. ein Anionenaustauscher ist. Der Kontakt kann dabei gleichzeitig oder nacheinandergeschaltet in Serie erfolgen. Möglich ist auch der Kontakt mit verschiedenen Ionenaustauschern in verschiedenen Verfahrensstufen, die eine erfindungsgemäße elektrolytische Behandlung umfassen.

Bei dem Ionenaustauscher handelt es sich um ein partikuläres Ionenaustauschermaterial. Der Ionenaustauscher kann als Sol oder als Gel vorliegen. Sowohl Kationenaustauscher als auch Anionenaustauscher sind für den erfindungsgemäßen Einsatz geeignet, je nach der Art der gewünschten Effekte, die durch die Elektrolyse erreicht werden sollen. Geeignete Kationenaustauscher umfassen je nach Einsatzzweck stark saure Kationenaustauscher auf Sulfonsäurebasis, schwach saure Kationenaustauscher auf Carboxylbasis, stark basische Anionenaustauscher mit quatanären Ammoniumgruppen oder schwach basische Anionenaustauscher mit Aminogruppen.

In einer Ausführungsform liegt der Ionenaustauscher als partikuläres Ionenaustauschermaterial in einer Zone vor, die von dem Ausgangsstoff und/oder dem Zwischenprodukt durchströmt wird. Vorzugsweise wird dabei die Strömungsrichtung des Ausgangsstoffes und/oder des Zwischenprodukts so gewählt, dass das partikuläre Ionenaustauschermaterial während der Durchströmung beziehungsweise durch die Durchströmung gepackt wird. Dies steht im Gegensatz zu einem Wirbelschichtverfahren, wobei ein partikuläres Material durch ein einströmendes Fluid aufgelockert wird und so die Wirkungsfläche zwischen der partikulären Oberfläche und dem Fluid erhöht wird. So kann es beispielsweise vorgesehen sein, dass der Ausgangsstoff und/oder das Zwischenprodukt von oben in ein das partikuläre Ionenaustauschermaterial enthaltende Kompartiment einströmt, und es an dessen Unterseite wieder verlässt. Die Flussrichtung folgt somit der Schwerkraft und der natürlichen Setzungsrichtung des partikulären Ionenaustauschermaterials. Gegebenenfalls werden dabei Teile der Elektroden oder die kompletten Elektroden von dem gepackten Ionenaustauscher fest umschlossen.

Unter Verwendung einer derartigen Anordnung konnte überraschend festgestellt werden dass die am Ionenaustauscher assoziierten und/oder im Ausgangsstoff und/oder Zwischenprodukt befindlichen Inhalts- oder Zusatzstoffe in größerer Menge mit dem abgeführten Gas abgeführt werden. Dies kann darauf zurückzuführen sein, dass die Abscheidung an den Elektroden verringert oder vermieden wird. Es kann ferner sein, dass der Stromfluss in dieser Anordnung bei der Gasbildung ein Mitreißen der Inhalts- oder Zusatzstoffe bewirkt, die anschließend mit den gebildeten Gasen abgeführt werden können.

In einer Ausführungsform der erfindungsgemäßen Verfahren werden dem Ausgangsstoff und/oder dem Zwischenprodukt vor der elektrolytischen Behandlung ein oder mehrere Zusatzstoffe oder Inhaltsstoffe zugesetzt.

Zusatzstoffe und Inhaltsstoffe umfassen in der vorliegenden Erfindung einen oder mehrere Stoffe ausgewählt aus der Gruppe der Ionen, der Säuren, der Laugen, der Salze, der Enzyme, der Proteine, der Fette, der Kohlehydrate, der Vitamine, der Balaststoffe und der Bakterien.

Ionen umfassen beispielsweise Mengenelemente wie Natrium, Magnesium, Kalium, Kalzium, Phosphor, Schwefel oder Chlorid und Spurenelemente wie Fluorid, Silizium, Vanadium, Rubidium, Chrom, Mangan, Eisen, Kobalt, Kupfer, Zink, Arsen, Selen, Molybdän, Zinn oder Jod.

Beispiele für Säuren umfassen organische oder anorganische Säure, insbesondere Fettsäuren, Aminosäuren oder andere physiologisch verträgliche Säuren wie Milchsäure, Kohlensäure, Essigsäure, Zitronensäure oder Weinsäure.

Laugen umfassen unter anderem Hydrogencarbonate.

Eiweiße/Enzyme umfassen beispielsweise Lab, Chymosin, Pepsin, Amylase und Kasein.

Kohlenhydrate umfassen Malz, Weizen, Malzzucker, Dextrine, Ethanol, Stärke und verschiedene Ballaststoffe wie Zellulose.

Pflanzliche Zusätze wie Hopfen, Hopfendolden oder Hopfenextrakt sind ebenfalls vom Begriff der Zusatzstoffe umfasst.

Bakterien und Kleinstlebewesen umfassen Milchsäurebakterien, Hefezellen, Essigsäurebakterien oder andere Fermentationsbakterien.

In einer Ausführungsform der Erfindung ist der Ausgangsstoff Wasser. Dabei ist es denkbar, dass die elektrolytische Behandlung zur Vorbehandlung des Wassers dient. Beispielsweise können unerwünschte Ionen durch Elektrolyse aus dem Wasser entfernt werden. Auch die chemische Veränderung von Inhaltsstoffen des Wassers durch Elektrolyse ist denkbar.

In einer Ausführungsform handelt es sich bei dem erfindungsgemäßen Verfahren um Verfahren zur Herstellung von Bier. Als Ausgangsstoff bzw. als Zwischenprodukt kommen in diesem Fall Wasser, Maische, Würze oder das ausgeschlagene Bier vor, während oder nach der Gärung in Betracht. Geeignete Punkte zur Durchführung eines erfindungsgemäßen Verfahrens sind vor, während oder nach dem Maischen, der Läuterung, dem Würzekochen, dem Ausschlagen, dem Gären, dem Nachgären oder dem Filtrieren.

In einer weiter bevorzugten Ausführungsform ist das Lebensmittel ein Milchprodukt, vorzugsweise Käse.

Es kann vorgesehen sein, daß es sich um ein Verfahren zur Verarbeitung von Milch handelt, vorzugsweise um ein Verfahren ausgewählt aus der Gruppe der Käseherstellung, der Herstellung von Butterprodukten, der Herstellung von Süß- oder Sauermolke, der Herstellung von Rahmprodukten, der Herstellung von verschiedenen Milchsorten aus Rohmilch und der Herstellung von Milch und/oder Molkepulver.

Die Käseherstellung umfasst die Herstellung von Hartkäse, Schnittkäse, Schmelzkäse, Rahmkäse, Weichkäse, Kochkäse, Sauermilchkäse, Molkenkäse, Braunkäse, Salzlakenkäse, Brühkäse, Frischkäse oder Mascarpone. Geeignete Ausgangsstoffe umfassen Rohmilch, Labmolke, Süßmolke, pasteurisierte Milch, fettarme Milch, Sauermilch oder Dickmilch, Gallerte oder Dickette, Sauermolke und ähnliches.

Unter die Herstellung der Butterprodukte fällt die Herstellung von Molkenbutter, Sauerrahmbutter, Butterschmalz, geklärter Butter, gesäuerter Butter und Süßrahmbutter. Geeignete Ausgangsstoffe umfassen Rohmilch, Rahm, Labmolke oder Süßmolke, Sauerrahm oder Sahne.

Die Herstellung von Molkeprodukten umfasst die Herstellung von Sauermolke, Labmolke oder Süßmolke. Geeignete Ausgangsstoffe umfassen Rohmilch, fettarme Milch, pasteurisierte Milch, Sauermilch, Dickmilch, Gallerte, oder Dickette.

Die Herstellung von Rahmprodukten umfasst die Herstellung von Creme fraiche, von Schmand, von saurer Sahne, von Kaffeesahne, von Sahne, von Schlagsahne, von Creme double, von Sauerrahm, von Rahm oder von Kondenssahne. Geeignete Ausgangsstoffe umfassen insbesondere die Rohmilch, wobei während des Aufrahmens Rahm abgeschöpft wird.

Die Herstellung von Sauermilchprodukten umfasst die Herstellung von Quark, von Gallerte, von Dickette, von Sauermilch, von Dickmilch, von Kefir, von Joghurt, von Sahnejoghurt und von Buttermilch, Geeignete Ausgangsstoffe umfassen Rohmilch, pasteurisierte Milch, oder fettarme Milch.

Unter die Herstellung von verschiedenen Milchsorten fällt die Herstellung von fettarmer Milch, von pasteurisierter Milch, von Vollmilch, von Frischmilch, von H-Milch, von Sterilmilch, von Kondensmilch, von fettarmer Milch, von Magermilch, von Kondensmagermilch, von fettarmer H-Milch oder teilentrahmter Kondensmilch. Geeignete Ausgangsstoffe umfassen insbesondere Rohmilch.

In einer bevorzugten Ausführungsform erfolgt die elektrolytische Behandlung während oder nach einem Verfahrensschritt ausgewählt aus der Gruppe des Aufrahmens der Milch, des Entrahmens der Milch, des Fermentierens der Milch mit Milchsäurebakterien und/oder nach oder vor der Butterung von Sahne.

Als Zusatzstoffe bei der Milchproduktion eignet sich insbesondere Milchsäurebakterien wie der Lactobazillus casei, der Lactobazillus bulgaricus, welcher bei der Herstellung von Joghurt eingesetzt wird oder der Lactobazillus helveticus, welcher bei der Käseherstellung eingesetzt wird.

Ausführungsbeispiele der Erfindung werden nachstehend anhand der beigefügten Zeichnung im einzelnen erläutert. In der Zeichnung zeigt
- Fig. 1: eine Vorrichtung durch Durchführung eines erfindungsgemäßen Verfahrens in einer schematischen Ansicht,
- Fig. 2: eine schematische Darstellung der Behandlung vom Milch nach Anreicherung mit Lab.
- Fig. 3: eine schematische Darstellung der Behandlung einer Flüssigkeit, bei der nicht erwünschte Inhaltsstoffe reduziert werden,
- Fig. 4: eine schematische Darstellung eines Vergleichsbeispiels, bei dem eine Flüssigkeit mit lösbaren Inhaltsstoffen angereichert wird,
- Fig. 5: eine schematische Darstellung eines Vergleichsbeispiels, bei dem der Calciumgehalt in Milch erhöht wird, und
- Fig. 6: eine schematische Darstellung eines Vergleichsbeispiels, bei dem Milch mit Molkenproteinen angereichert wird.

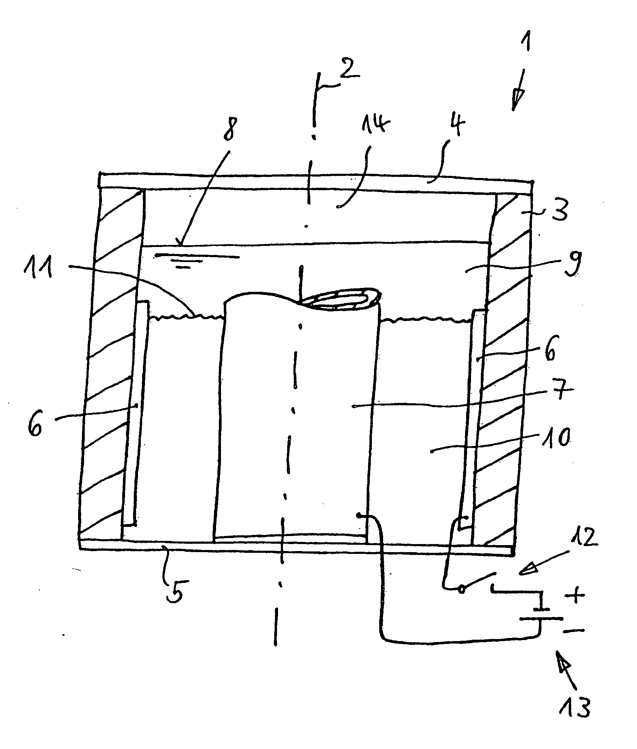

Fig. 1 zeigt einen Behälter 1 mit mindestens einem Einlassventil und mindestens einem Auslassventil (in der Zeichnung nicht dargestellt), sodass der zu behandelnde Ausgangsstoff und/oder Zwischenprodukt im Durchfluss behandelt werden kann. In dem Behälter 1 kann ein lonentausch- und Elektrolyseverfahren durchgeführt werden. Das Ionentausch- und Eleketrolyseverfahren kann gemeinsam durchgeführt werden. Das Elektrolyseverfahren kann unter Verwendung eines Ionenaustauschers auch ohne andauernde Stromzufuhr betrieben werden kann.

Die in Figur 1 gezeigte Vorrichtung umfasst einen Behälter 1, der um die Mittelachse 2 rotationssymetrisch ausgestaltet ist und der aus einem rohrförmigen Gehäuse 3 besteht, das durch einen oberen Deckel 4 und einen unteren Deckel 5 abgeschlossen ist. Die Vorrichtung ist vorzugsweise länger als dargestellt ausgeführt.

An der Innenwand des Gehäuses 3 befindet sich eine ringförmige äußere Elektrode 6. Im Inneren des Gehäuses 3 befindet sich eine rohrförmige innere Elektrode 7. Der Behälter 1 ist bis zum Spiegel 8 mit Ausgangsstoff und/oder Zwischenprodukt 9 gefüllt, welches kontinuierlich von oben in den Behälter eingeleitet wird. Der Flüssigkeitsspiegel kann auch bis zum Deckel 4 reichen, wodurch der Behälter 1 vollständig gefüllt wäre. Weiter ist denkbar, dass der Ausgangsstoff und/oder das Zwischenprodukt mit Druck in den Behälter eingebracht wird.

Zwischen den Elektroden 6 und 7 ist partikuläres Ionenaustauscherharz 10 vorhanden, welches bis zur Höhe 11 gelförmig vorliegt. Abweichend von der Zeichnung kann die Vorrichtung vorzugsweise derart ausgestaltet sein, dass die Höhe 11 am oder über dem oberen Ende der Elektrode 6 liegt. Durch den von oben nach unten gerichteten Strom der Flüssigkeit wird der partikuläre Ionenaustauscher komprimiert und umgibt die Elektroden 6 und 7 fest gepackt. Hierdurch erfolgt während der Elektrolyse keine Abscheidung der im Ausgangsstoff und/oder Zwischenprodukt befindlichen Stoffe direkt an den Elektroden, sondern die an den Ionenaustauschern in Ionenbindung befindlichen Stoffe werden mit den während der Elektrolyse gebildeten Wasserstoff- und Sauerstoffgasen abgeführt.

Die äußere Elektrode 6 ist in dem Ausführungsbeispiel über den Schalter 12 mit dem Pluspol einer Stromquelle 13 verbunden und dient während dem Elektrolysevorgang durch die Aufnahme von Elektronen des Wassers als Anode. Die innere Elektrode ist mit dem Minuspol der Stromquelle 13 verbunden und dient während dem Elektrolysevorgang durch Elektronenabgabe an das Wasser als Kathode. An der Anode entsteht während der Elektrolyse Sauerstoffgas, und an der Kathode Wasserstoffgas.

### 1. Beispiel: Herstellung einer Käsemasse aus Trinkmilch

Bei Beispiel 1 handelt es sich um ein nicht von der vorliegenden Erfindung umfasstes Vergleichsbeispiel.

Bei der Herstellung einer Käsemasse aus Trinkmilch wird die Milch zunächst nicht vorbehandelt. Die Milch wird mit oder ohne Zusätze in dem Behälter 1 einem Elektrolyseverfahren unterzogen. Die Milch kann in dem Behälter 1 im Durchlauf und/oder mit Standzeiten elektrolytisch behandelt werden. Als Zusätze können bestimmte Bakterien (Säurebakterien), Enzyme, und Geschmacksstoffe verwendet werden.

Bei dieser Behandlung werden die Zuordnungen von Inhaltsstoffen und/oder deren Bindungsarten so verändert, dass nachfolgende Behandlungsschritte leichter und kostengünstiger durchgeführt werden können bzw. erst ermöglicht werden. Fette, Calciumeiweißkomplexe und Molkenproteine werden in ihrem Bindungsverhalten verändert. Zur Geschmacksausbildung werden Säuerungsabläufe und/oder enzymatische Abläufe beschleunigt oder verlangsamt. Auch haptische und/oder olfaktorische Eigenschaften der Milch werden beeinflusst.

Neben dieser Einflussnahme entstehen während des Elektrolysevorgangs Wasserstoff und Sauerstoff.

Die auf diese Weise in dem Behälter 1 durch ein Elektrolyseverfahren behandelte Milch wird anschließend einem bekannten Verkäsungsverfahren unterzogen. Geeignet sind bekannte Verkäsungsverfahren aller Art.

Durch das Verkäsungsverfahren entsteht Käsebruch. Dieser kann in einer Ausführungsform nicht wie üblich unter Abgabe von Molke zu einer halbfesten oder festen Masse geformt werden. Es entstehen Käsekörner, die einem Reifungsvorgang ausgesetzt werden und die nach der Reifung als Käsecreme vorliegen.

Ein solches Verfahren weist unter anderem den Vorteil auf, dass die Milch keinem Pasteurisierungsvorgang unterworfen werden muss, da durch die Elektrolyse auch unerwünschte Bakterien unschädlich gemacht werden können.

Dementsprechend kann das Verfahren auch dazu dienen, eine Trinkmilch aus einer Rohmilch herzustellen. Die Rohmilch wird einer Elektrolyse unterworfen. Hierdurch kann die sonst erforderliche Pasteurisierung entbehrlich gemacht werden.

### 2. Beispiel: Behandlung vom Milch nach Anreicherung mit Lab

Bei Beispiel 2 handelt es sich um ein nicht von der vorliegenden Erfindung umfasstes Vergleichsbeispiel.

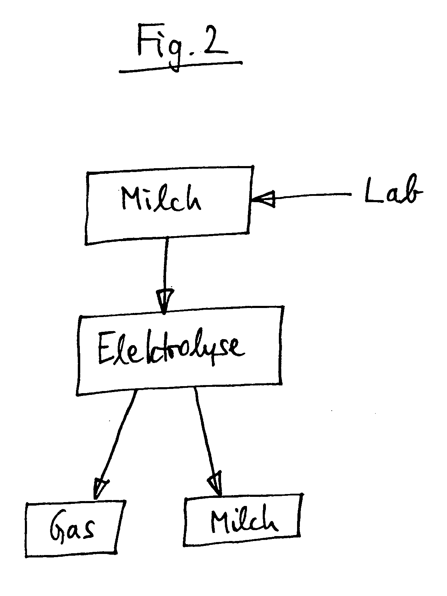

Wie in Fig. 2 schematisch dargestellt wird zu Milch eine geringe Menge an Lab zugesetzt und diese Milch sodann einer Elektrolyse unterzogen.

Bei der Elektrolyse entstehen Wasserstoff und Sauerstoff. Gleichzeitig werden Milchinhaltsstoffe verändert und der Wassergehalt entsprechend der Gaserzeugung erniedrigt. Dieser Vorgang bewirkt eine verbesserte Wirkung des zugesetzten Labs, sodass die Zusatzmenge des Enzyms im Vergleich zur traditionellen Zusatzmenge erheblich verringert werden kann.

Gleichzeitig entstehen größere Eiweißkomplexe, wodurch die Verkäsbarkeit der so behandelten Milch zunimmt.

### 3. Beispiel: Behandlung einer Flüssigkeit und Reduzierung nicht erwünschter Inhaltsstoffe

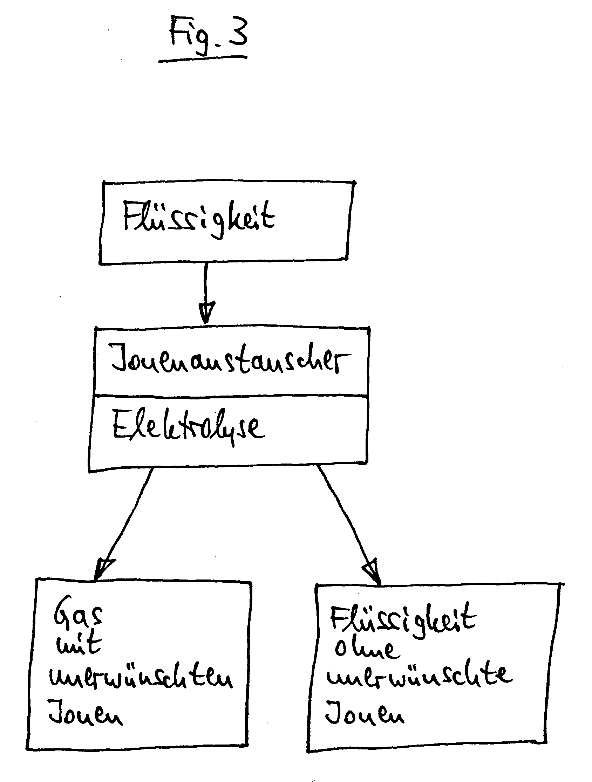

Bei dem in Fig. 3 schematisch dargestellten, erfindungsgemäßen Verfahren wird ein flüssiger Ausgangsstoff durch ein partikuläres Ionenaustauschermaterial geleitet und der Ionenaustauscher mit unerwünschten Inhaltsstoffen, beispielsweise unerwünschten Ionen beladen.

Während diesem Vorgang werden der Ionenaustauscher und die Flüssigkeit elektrolysiert. Hierfür kann die in Fig. 1 gezeigte Vorrichtung verwendet werden.

Es entstehen Wasserstoff und Sauerstoff. Die unerwünschten Inhaltsstoffe werden mit den Gasen ausgetragen. Auf diese Weise werden diese der Flüssigkeit entzogen.

### 4. Beispiel: Behandlung einer Flüssigkeit zur Anreicherung mit mehreren lösbaren Inhaltsstoffen

Bei Beispiel 4 handelt es sich um ein nicht von der vorliegenden Erfindung umfasstes Vergleichsbeispiel.

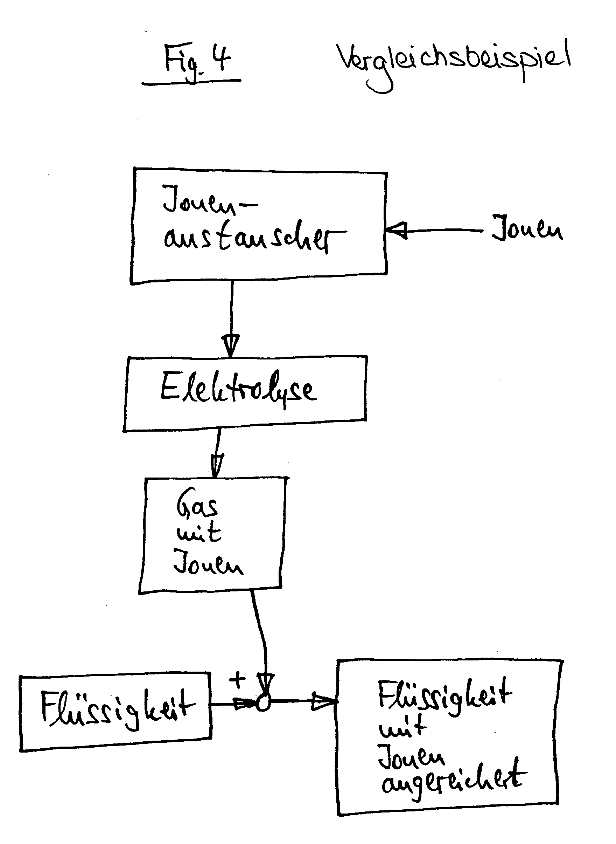

Bei dem in Fig. 4 schematisch dargestellten Verfahren wird ein flüssiges Sekundärmedium durch ein partikuläres Ionenaustauschermaterial geleitet und der Ionenaustauscher mit bestimmten Stoffen beladen. Während diesem Vorgang werden der Ionenaustauscher und die Flüssigkeit elektrolysiert. Hierfür kann die in Fig. 1 gezeigte Vorrichtung verwendet werden.

Es entstehen Wasserstoff und Sauerstoff. Gewisse im Sekundärmedium vorhandene Zusatzstoffe werden mit den Gasen ausgetragen.

Diese Gase werden sodann in einen Ausgangsstoff oder ein Zwischenprodukt vor der anschließenden Weiterverarbeitung zu einem Lebensmittel, Futtermittel oder pharmazeutischen Produkt in Kontakt gebracht. Die in den Gasen befindlichen Inhaltsstoffe gehen in der oder den Flüssigkeiten in Lösung.

So kann beispielsweise Wasser, das der Bierherstellung dient, mit den dafür notwendigen Inhaltsstoffen angereichert werden.

### 5. Beispiel: Erhöhung des Calciumgehaltes in Milch

Bei Beispiel 5 handelt es sich um ein nicht von der vorliegenden Erfindung umfasstes Vergleichsbeispiel.

In der Käseproduktion wird die verwendete Milch mit einem Gas kontaktiert wird, welches mit Kalziumionen angereichert ist.

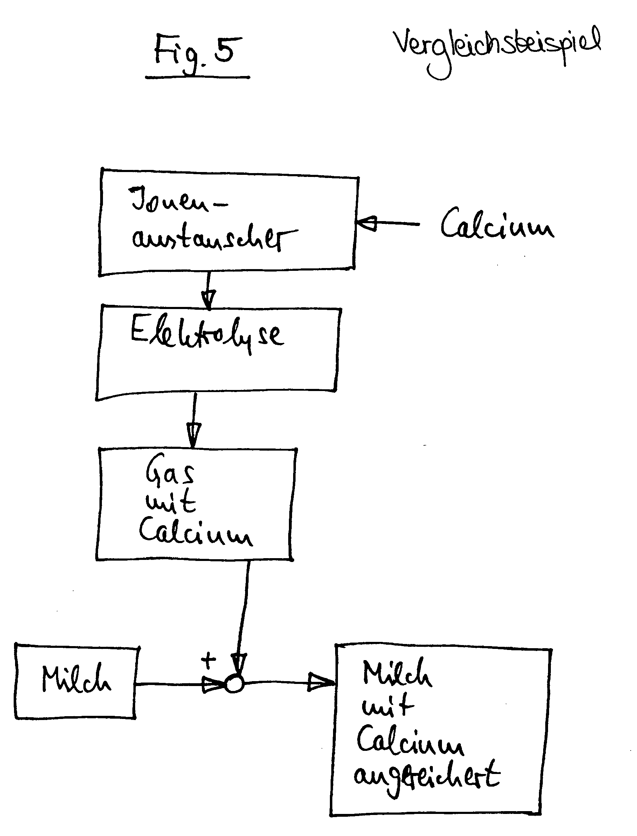

Ein Kationenaustauscherharz wird in der aus Fig. 5 ersichtlichen Weise mit einer Calciumchloridlösung behandelt, sodass beispielsweise Natrium durch Calcium ersetzt wird. Die Ionenaustauschersäule mit darin befindlichen Harzen in Calciumform wird sodann einem Elektrolyseverfahren unterzogen, beispielsweise dem Verfahren nach der DE 103 59 509 B1.

Die Ionenaustauscher geben das Calcium an die entstehenden Gase ab. Diese Gase werden anschließend in Milch eingeleitet und die Calciumionen gehen in der Milch in Lösung. Sie können nun mit den in der Milch vorliegenden Eiweißen wechselwirken, sodass sich diese verändern. Beispielsweise werden größere eiweißkomplexe entstehen, die aus der Lösung ausfallen.

### 6. Beispiel: Behandlung von Molke zur Anreicherung mit Molkeproteinen

Bei Beispiel 6 handelt es sich um ein nicht von der vorliegenden Erfindung umfasstes Vergleichsbeispiel.

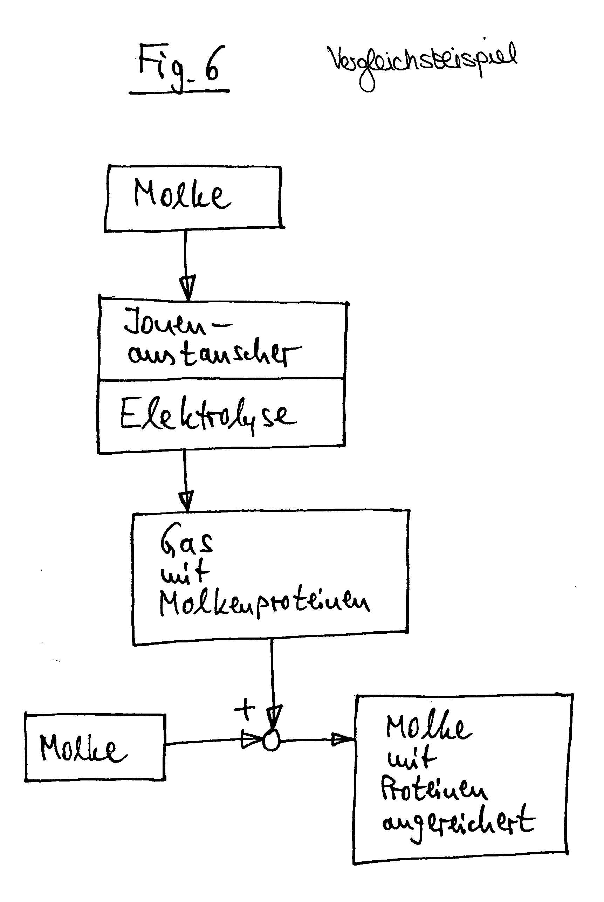

Bei dem in Fig. 6 schematisch dargestellten Beispiel wird Molke (Sekundärmedium) über einen selektiven Ionenaustauscher geleitet, der Molkenproteine anlagern kann. Der Ionenaustauscher wird dabei in der Molke einer Elektrolyse unterzogen. Dies kann in einer Vorrichtung gemäß Fig. 1 geschehen.

Die Ionenaustauscher geben die Molkeproteine an die entstehenden Gase ab, die anschließend in eine andere, anzureichernde Molke geleitet werden.

## Patentansprüche

1. Verfahren zur Herstellung eines Milchproduktes oder von Bier umfassend die Verarbeitung eines Ausgangsstoffes oder Zwischenproduktes ausgewählt aus der Gruppe von Wasser, Maische, Würze oder ausgeschlagenem Bier, Rohmilch, Rahm, Labmolke, Süßmolke, pasteurisierter Milch, fettarmer Milch, Sauermilch, Dickmilch, Gallerte, Dickette, Sauermolke, Sauerrahm, oder Sahne, wobei dieser Ausgangsstoff oder dieses Zwischenprodukt elektrolytisch behandelt und während der elektrolytischen Behandlung mit mindestens einem Ionenaustauscher kontaktiert wird, sodass die elektrolytische Behandlung in Gegenwart des Ionenaustauschers erfolgt,
**dadurch gekennzeichnet,**
**dass** es sich bei dem Ionenaustauscher um ein partikuläres Ionenaustauschermaterial handelt.

2. Verfahren nach Anspruch 1, wobei während der elektrolytischen Behandlung durch die Zersetzung von Bestandteilen des Ausgangsstoffs und/oder Zwischenprodukts, vorzugsweise von Wasser, Gase, vorzugsweise Wasserstoff und/oder Sauerstoff entstehen.

3. Verfahren nach Anspruch 2, wobei ein oder mehrere im Ausgangsstoff und/oder Zwischenprodukt enthaltene Inhaltsstoffe mit den Gasen abgeführt werden.

4. Verfahren nach einem der vorhergehenden Ansprüche, wobei der Ionenaustauscher zumindest einen Inhaltsstoff des Ausgangsstoffes und/oder Zwischenprodukts bindet.

5. Verfahren nach einem der Ansprüche 2 bis 4, wobei während der elektrolytischen Behandlung am Ionenaustauscher gebundene Inhaltsstoffe mit den Gasen abgeführt werden.

6. Verfahren nach einem der vorangehenden Ansprüche, wobei dem Ausgangsstoff und/oder Zwischenprodukt vor der elektrolytischen Behandlung ein oder mehrere Zusatzstoffe zugesetzt werden.

7. Verfahren nach einem der Ansprüche 3 bis 6, wobei Zusatzstoffe und/oder Inhaltsstoffe aus der Gruppe der Ionen, Säuren, Laugen, Salze, Enzyme, Proteine, Fette, Kohlehydrate, Vitamine und Bakterien ausgewählt sind.

8. Verfahren nach einem der vorangehenden Ansprüche, wobei der Ausgangsstoff Wasser ist und wobei die elektrolytische Behandlung vorzugsweise zur Vorbehandlung des Wassers dient

9. Verfahren nach einem der vorhergehenden Ansprüche, wobei das Lebensmittel Käse ist, und wobei der Ausgangsstoff und/oder das Zwischenprodukt Milch oder ein milchbasiertes Produkt ist.

## Claims

1. A method of producing a milk product or beer comprising the processing of a starting substance or of an intermediate product selected from the group of water, mash, wort or knocked-out beer, raw milk, cream, rennet whey, sweet whey, pasteurized milk, low-fat milk, fermented milk, sour milk, gelatinous mass, Dickette, acid whey, sour cream or cream, wherein this starting substance or this intermediate product is electrolytically treated and is contacted by at least one ion exchanger during the electrolytic treatment so that the electrolytic treatment takes place in the presence of the ion exchanger,
**characterised in that**
the ion exchanger is a particulate ion exchanger material.

2. A method in accordance with claim 1, wherein gases, preferably hydrogen and/or oxygen, arise during the electrolytic treatment by the degradation of components of the starting substance and/or of the intermediate product, preferably of water.

3. A method in accordance with claim 2, wherein one or more ingredients contained in the starting substance and/or in the intermediate product are led away with the gases.

4. A method in accordance with one of the preceding claims, wherein the ion exchanger binds at least one ingredient of the starting substance and/or of the intermediate product.

5. A method in accordance with one of the claims 2 to 4, wherein ingredients bound at the ion exchanger are led away with the gases during the electrolytic treatment.

6. A method in accordance with one of the preceding claims, wherein one or more additives are admixed with the starting substance and/or with the intermediate product before the electrolytic treatment.

7. A method in accordance with one of the claims 3 to 6, wherein additives and/or ingredients are selected from the group of ions, acids, lyes, salts, enzymes, proteins, fats, carbohydrates, vitamins and bacteria.

8. A method in accordance with one of the preceding claims, wherein the starting substance is water and wherein the electrolytic treatment preferably serves the pretreatment of the water.

9. A method in accordance with one of the preceding claims, wherein the foodstuff is cheese and wherein the starting substance and/or the intermediate product is milk or a milk-based product.

## Revendications

1. Procédé de fabrication d'un produit laitier ou de bière comprenant la transformation d'une substance de base ou d'un produit intermédiaire choisi(e) dans le groupe comprenant l'eau, la maische, le moût ou le moût après cuisson, le lait cru, la crème de lait, le lactosérum doux, le petit-lait doux, le lait pasteurisé, le lait demi-écrémé, le lait caillé, le lait fermenté, le lait aigre, le caillé, le lactosérum acide, la crème aigre, ou la crème, cette substance de base ou ce produit intermédiaire étant traité(e) de manière électrolytique et mis(e) en contact avec au moins un échangeur d'ions pendant le traitement électrolytique de sorte que le traitement électrolytique est effectué en présence de l'échangeur d'ions,
**caractérisé en ce que**
l'échangeur d'ions est une matière échangeuse d'ions particulière.

2. Procédé selon la revendication 1, dans lequel, pendant le traitement électrolytique, des gaz, de préférence de l'hydrogène et/ou de l'oxygène, sont produits par la décomposition de constituants de la substance de base et/ou du produit intermédiaire, de préférence de l'eau.

3. Procédé selon la revendication 2, dans lequel un ou plusieurs composants contenus dans la substance de base et/ou le produit intermédiaire sont évacués avec les gaz.

4. Procédé selon l'une des revendications précédentes, dans lequel l'échangeur d'ions fixe au moins un composant de la substance de base et/ou du produit intermédiaire.

5. Procédé selon l'une des revendications 2 à 4, dans lequel des composants fixés à l'échangeur d'ions pendant le traitement électrolytique sont évacués avec les gaz.

6. Procédé selon l'une des revendications précédentes, dans lequel un ou plusieurs additifs sont ajoutés à la substance de base et/ou au produit intermédiaire avant le traitement électrolytique.

7. Procédé selon l'une des revendications 3 à 6, dans lequel des additifs et/ou composants sont choisis dans le groupe comprenant les ions, les acides, les solutions alcalines, les sels, les enzymes, les protéines, les graisses, les glucides, les vitamines et les bactéries.

8. Procédé selon l'une des revendications précédentes, dans lequel la substance de base est de l'eau et dans lequel le traitement électrolytique sert de préférence au prétraitement de l'eau.

9. Procédé selon l'une des revendications précédentes, dans lequel le produit alimentaire est du fromage, et dans lequel la substance de base et/ou le produit intermédiaire est du lait ou un produit à base de lait.
